(19) Europäisches Patentamt
European Patent Office
Office européen des brevets

(11) **EP 1 913 416 B1**

(12) **EUROPÄISCHE PATENTSCHRIFT**

(45) Veröffentlichungstag und Bekanntmachung des Hinweises auf die Patenterteilung:
**25.12.2019 Patentblatt 2019/52**

(21) Anmeldenummer: **06762368.6**

(22) Anmeldetag: **03.07.2006**

(51) Int Cl.:
**G01S 7/497** (2006.01)  **G01S 7/481** (2006.01)

(86) Internationale Anmeldenummer:
**PCT/EP2006/006474**

(87) Internationale Veröffentlichungsnummer:
**WO 2007/017020 (15.02.2007 Gazette 2007/07)**

(54) **ELEKTROOPTISCHES ENTFERNUNGSMESSGERÄT**

ELECTRO-OPTICAL RANGE FINDER

TÉLÉMÈTRE ÉLECTRO-OPTIQUE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **08.08.2005 EP 05107273**

(43) Veröffentlichungstag der Anmeldung:
**23.04.2008 Patentblatt 2008/17**

(73) Patentinhaber: **Leica Geosystems AG**
**9435 Heerbrugg (CH)**

(72) Erfinder: **SPRENGER, Franz**
**CH-9443 Widnau (CH)**

(74) Vertreter: **Kaminski Harmann**
**Patentanwälte AG**
**Landstrasse 124**
**9490 Vaduz (LI)**

(56) Entgegenhaltungen:
**EP-A- 0 701 702       EP-A- 1 351 070**
**DE-A1- 10 244 638       GB-A- 2 391 107**
**US-A- 5 812 893       US-B1- 6 501 538**

**Beschreibung**

Die Erfindung betrifft ein elektrooptisches Entfernungsmeßgerät nach dem Oberbegriff des Anspruchs 1 und ein Verfahren zum Justieren eines solchen Entfernungsmeßgeräts nach dem Oberbegriff des Anspruchs 15.

Als Handmeßgeräte oder Industriesensoren ausgebildete Entfernungsmeßgeräte sind seit längerer Zeit bekannt und im Handel erhältlich. Ihr Entfernungsmeßbereich beträgt bis zu 200m und sie werden beispielsweise in der Bauvermessung, z.B. zum 3-dimensionalen Vermessen von Räumen eingesetzt. Ein Sender emittiert hierfür intensitätsmodulierte Strahlung, wobei zumeist Wellenlängen im sichtbaren Bereich verwendet werden, was die Anzielung der Meßpunkte erleichtert. Die Strahlung wird vom Meßobjekt reflektiert bzw. gestreut und vom Empfänger aufgenommen. Aufgrund der Phasenlage der modulierten Strahlung gegenüber dem Sender ergibt sich die Entfernung zum Meßobjekt.

Ein solches Messgerät ist beispielsweise aus der EP 0 701 702 bekannt. In diesem Gerät emittiert ein Halbleiterlaser Licht auf ein zu vermessendes Objekt, wobei nach der Reflektion dieses Licht wieder empfangen und ausgewertet wird. Der Meßempfänger weist dabei eine Optik auf, deren Strahlachse im wesentlichen parallel zur Sendeachse orientiert ist, wobei im Nahbereich Umlenkelemente zur Strahlführung oder bewegliche, nachführbare Eintrittsfläche für die Meßstrahlung verwendet werden. Um eine hochpräzise Messung mit geringen Fremdlichtanteilen zu realisieren, muss die empfangene Strahlung auf den Messstrahlungsanteil beschränkt werden. kann Dies kann durch eine geeignete Wahl von Durchmesser der Detektorfläche des Empfängers zu Brennweite der Optik erreicht werden. Ein diesbezüglich vorteilhaftes kleines Verhältnis von Durchmesser zu Brennweite macht die Anordnung sensibel bezüglich der genauen Orientierung und bedingt eine Justierung der Komponenten, z.B. während der Fertigung, wie sie durch verstellbare Justierelemente oder entsprechende Verstellmöglichkeiten verwirklichbar sind.

Eine verstellbare Anordnung von Sender und Empfänger ist aus der EP 1 351 070 bekannt, in der ein elektrooptisches Distanzmeßsystem für grosse Meßbereiche mit parallel beabstandeter Anordnung der optischen Sende- und Empfangsachse beschrieben wird. Dabei sind die Strahlquelle und eine kleinflächige Photodiode miteinander mechanisch starr über eine in sich steif verbundene Leiterträgerplatine verbunden. Die kleinflächige Photodiode ist elektrisch leitend sowie in der Position über ihre elektrischen Kontakte auf der Leiterträgerplatine temporär justierbar fixiert. Die Justierung erfolgt somit durch eine Relativbewegung der Photodiode gegenüber der Leiterträgerplatine, wobei die Photodiode nach Erreichen der Optimalposition fixiert wird. Durch diesen im Gerät auszuführenden Fixierungsschritt, bei dem eine einzelne elektronische Komponente bewegt werden muss, wird die Fertigung verkompliziert.

Insbesondere kann die Photodiode nicht bereits mechanisch starr auf der Platine fixiert werden. Dies verhindert die Nutzung der Vorteile von oberflächenmontierten Bauelementen (Surface Mounted Device), die vollautomatisch mit Standardmaschinen direkt auf die Leiterbahnen gelötet werden, z.B. in Hinblick auf Bestückungs- und Festigkeitsgesichtspunkte.

US 5,812,893 zeigt verschiedene Ausführungsformen einer Entfernungsmesseinheit für Photoapparate, bei welcher der Lichtemitter auf der Vorderseite und der Lichtempfänger auf der Rückseite einer Leiterplatte angebracht sind, um ein Übersprechen von Lichtemitter zum Lichtempfänger zu vermeiden.

Es ist die Aufgabe der Erfindung, einen optoelektronischen Entfernungsmesser mit verbessertem Aufbau, erhöhter Stabilität und vereinfachten Zusammenbau bereitzustellen.

Diese Aufgabe wird durch den Gegenstand des Anspruchs 1 bzw. 14 gelöst bzw. die Lösungen durch die abhängigen Ansprüche weitergebildet.

Die Erfindung betrifft vorwiegend gattungsgemäße handhaltbare Entfernungsmesser nach dem Phasen- oder Pulslaufzeitmeßprinzip und basiert auf einer Justierbarkeit von Empfängerkomponenten durch Verschiebung des diese Komponenten tragenden Trägerelementes. Dabei wird der Meßempfänger auf einem Trägerelement zumindest bezüglich zweier Bewegungsrichtungen fest montiert und somit translatorisch festgelegt. Justagen in diesen Bewegungsrichtungen erfolgen durch Verschieben der vollständigen Leiterplatte gegenüber der Strahlachse der Empfangsoptik, wobei die Leiterplatte auch Komponenten der Auswerteelektronik aufnehmen kann. Geeignete Trägerelemente sind beispielsweise Leiterplatte oder Platine, die als gedruckte Schaltung bzw. Printed Circuitry Board über Leiterbahnen für die Komponenten verfügen und automatisch bestückt werden können.

Die Befestigung des Meßempfängers auf der Leiterplatte kann vorteilhaft als sogenanntes oberflächenmontiertes Bauelement oder Surface Mounted Device erfolgen. Hierbei weisen die Komponenten keine Drahtanschlüsse auf, sondern werden mittels lötfähiger Anschlußflächen direkt auf die Leiterplatte gelötet. Hierdurch entsteht eine gegenüber Umwelteinflüssen robuste und mechanisch belastbare Verbindung.

Wird die Empfangsoptik mit Fixfokus realisiert, so kann der Meßempfänger in allen drei Richtungen und damit starr auf dem Trägerelement fixiert werden. Eine Positionierung muss somit nur noch in den zwei Bewegungsrichtungen senkrecht zur optischen Achse der Empfangsoptik erfolgen. Nach einer erfolgten Justierung kann dann die Leiterplatte bzw. das Trägerelement fixiert werden, z.B. durch Anziehen von Schrauben, Verkleben oder durch andere Verfahren der Befestigung.

Eine Alternative zum Fixfokus stellt eine Fokussierung über einen Spiegel oder ein anderes Umlenkelement dar, der den Strahlgang zum Meßempfänger verlängert oder verkürzt. Dabei kann der Spiegel gegenüber dem Meßempfänger bewegt werden, so dass durch diese variierbare Distanz der dritte Freiheitsgrad für eine Fokussierung erreicht wird. Die Fokussierung bei dieser Variante ist somit unabhängig von der Justierung in den beiden anderen Bewegungsrichtungen und kann sehr einfach in einer Achse vor der Justierung vorgenommen werden. Erst bei oder nach der Justierung kann das Justierbild scharf gesehen werden.

Eine eingeschränkte direkte Justierbarkeit gegenüber dem Trägerelement kann durch eine Verstellbarkeit des Meßempfängers in einer Bewegungsrichtung erreicht werden. Somit kann eine Optik ohne Fixfokus verwendet werden und die Fokussierung erfolgt durch die Bewegung hinsichtlich des verbliebenen translatorischen Freiheitsgrades. Eine Möglichkeit einer solchen Bewegung kann durch die Anbringung des Meßempfängers auf einem freigestellten Streifen der bedruckten Leiterplatte erfolgen. Der bedruckte Teil der Leiterplatte, auf dem der Meßempfänger angeordnet ist, wirkt dabei federnd und kann beispielsweise durch eine Schraube oder ein anderes Verstellelement in den Fokus gedrückt werden.

Die Vorteile dieser Ausführungsbeispiele liegen insbesondere in der Befestigbarkeit von Avalanche-Photodioden als oberflächenmontiertes Bauelement oder Surface Mounted Device. Diese Dioden können deshalb im gleichen Arbeitsgang mit dem Rest der Elektronik automatisch bestückt werden.

Eine vorteilhafte und von der konkreten Befestigung der Laserdiode grundsätzliche unabhängige Ausgestaltung bietet zudem die Integration eines Treiberchips in den Standardaufbau einer Laserdiode, z.B. indem der Photodiodenchip durch den Treiberchip ersetzt wird. Hierbei kann weiterhin dasselbe Gehäuse verwendet werden, wobei die Kontakte folgendermassen belegt werden:

    1) Ground,
    2) VCC Spannungsversorgung,
    3) Signaleingang.

Aus dem Verschieben des Treiberchips in das Laserdiodengehäuse ergeben sich diverse Vorteile:
Zum einen können kurze Pulse mit hoher Leistung erzeugt werden, die eine bessere Messperformance erlauben. Um solche Pulse mit einige 100 ps Pulsweite zu erzeugen, müssen möglicht hohe Ströme in sehr kurzer Zeit durch den Laser geführt werden. Dabei ist die Induktivität des Schaltungskreises aus Treiber und Laser ein begrenzender Faktor. Die benötigte Spannung ist hierbei proportional zur Induktivität bei einem vorgegebenen Stromanstieg

$$U = L \cdot \frac{dI}{dt}$$

Dabei wird die Spannung durch die verwendete Halbleitertechnologie begrenzt, d.h. je schneller die Technologie, desto kleiner sind die möglichen verwendbaren Spannungen. Durch das Zusammenbringen von Treiberchip und Laserchip in einem Standardgehäuse kann auf diese Weise die Induktivität im Leistungsstromkreis optimiert werden.

Zum anderen ist kurzen Pulsen die Abstrahlung von Störstrahlung stets ein Problem, so daß metallische Schirmkammern gebaut werden müssen. Die Verwendung des Lasergehäuses bewirkt eine gute Schirmung des Lastkreises, so dass der restliche Aufbau von Optik und gedruckter Schaltung auf Kunststoffmodulen möglich wird.

Die translatorische Positionierung des Meßempfängers gegenüber der optischen Achse der Empfangsoptik ist sehr einfach zu realisieren, da die bestückte Leiterplatte einfach an der Außenseite oder Kante gefaßt und verschoben wird. Dabei ist die Platine sehr einfach zugänglich für eine Justiervorrichtung.

Aufgrund der hohen verwendeten Frequenzen ist zumeist eine Schirmung der Elektronik notwendig. Da für die Halterung der Optik aus Stabilitätsgründen ein Modul aus Metall verwendet wird, kann zusammen mit den Leiterbahnen eine abgeschirmte Kammer gebildet werden.

Meist wird für eine optimale Messung auf kurze Distanzen, z.B. ab 5cm, ein zusätzliches optisches Element benötigt. Die erfindungsgemässe Lösung erlaubt es, dieses Element nach der Bestückung auf die Photodiode aufzubringen. Danach wird die Platine am Optikmodul bzw. Optikträger befestigt und justiert.

Im folgenden werden Ausführungsbeispiele der Erfindung anhand der Zeichnung rein schematisch näher erläutert. Es zeigen

Fig. 1    ein erstes Ausführungsbeispiel eines erfindungsgemässen Entfernungsmeßgerätes;

Fig. 2a-b    schematische Detailansichten des ersten Ausführungsbeispiels;

Fig. 3a-b    figürliche Detailansichten des ersten Ausführungsbeispiels;

Fig. 4    eine schematische Detailansicht eines zweiten Ausführungsbeispiels des erfindungsgemässen Entfernungsmeßgerätes und

Fig. 5    eine schematische Detailansicht eines dritten Ausführungsbeispiels des erfindungsgemässen Entfernungsmeßgerätes.

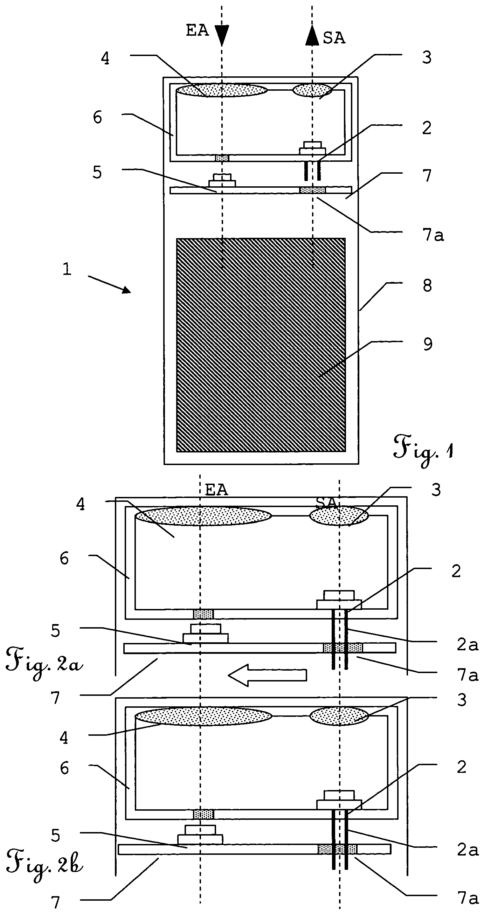

Fig. 1 zeigt ein erstes Ausführungsbeispiel eines erfindungsgemässen eelektrooptischen Entfernungsmessgeräts 1 mit einer Laserdiode 2 als Sender, der optische Strahlung bzw. Laserlicht über eine Sendeoptik 3 mit einer Sendeachse SA zur Beleuchtung eines Messobjekts emittiert. Das vom Messobjekt reflektierte Licht wird von einer Empfangsoptik 4 mit einer Empfangsachse EA empfangen und auf einen Messempfänger 5, z.B. eine Avalanche-Photodiode, geführt. Dabei sind die Sendeachse SA und die Empfangsachse EA parallel oder nur geringfügig gegeneinander geneigt orientiert, so dass die Anordnung innerhalb des Messbereichs einen Charakter von gegeneinander parallel versetzten Strahlgängen aufweist. Die Sendeoptik 3 und die Empfangsoptik 4 können dabei vorteilhaft auf einem gemeinsamen Optikträger 6 angeordnet sein, der auch die Laserdiode 2 aufnehmen und gegenüber der Sendeoptik 3 starr fixieren kann. In diesem Ausführungsbeispiel ist die Emissionsachse der Laserdiode 2 koaxial zur Sendeachse der Sendeoptik 3.

Der Laserdiode 2 ist ein erstes Trägerelement mit einer Sendelektronik und dem Messempfänger 5 ein zweites Trägerelement mit einer Empfangselektronik zugeordnet, wobei in diesem Ausführungsbeispiel beide Trägerelemente in Form einer einzigen Leiterplatte 7 als gemeinsames Trägerelement ausgebildet sind. Dabei ist der Messempfänger 5 mit dem zweiten Trägerelement bzw. der Leiterplatte 7 bezüglich wenigstens zweier Bewegungsrichtungen starr verbunden, wobei in diesem Ausführungsbeispiel eine vollständig starre Befestigung unter Festlegung aller Freiheitsgrade bzgl. der Leiterplatte 7 erfolgt. Die Befestigung erfolgt bei der Ausbildung als oberflächenmontiertes Bauelement direkt und endfixiert auf der Leiterbahn. In diesem Ausführungsbeispiel ist zudem in der Leiterplatte 7 ist eine Öffnung 7a oder ein Durchbruch ausgebildet, durch den die Kontaktelemente 2a der Laserdiode 2 geführt werden. Während die Laserdiode 2 auf dem Optikträger 6 fixiert und somit gegenüber der Sendeoptik 3 definiert positioniert ist, kann der Messempfänger 5 durch eine Bewegung der Leiterplatte 7 gegenüber der Empfangsachse EA verschoben und damit justiert werden. Die Empfangsoptik 4 ist in diesem Ausführungsbeispiel mit einem Fixfokus ausgebildet, so dass auf eine fokussierende Justierung des Messempfängers 5 verzichtet werden kann. Der Optikträger 6 mit seinen Komponenten und die Leiterplatte 7 sind zusammen mit weiteren Komponenten 9, wie z.B. der Stromversorgung, in einem Gehäuse 8 des Entfernungsmessgeräts 1 angeordnet. Nach erfolgter Justierung sind die Achse des Messempfängers 5 und die Empfangsachse der Empfangsoptik 4 im wesentlichen koaxial ausgerichtet.

Die erfindungsgemässe Justierung für das erste Ausführungsbeispiels wird in Fig. 2a-b in schematische Detailansichten erläutert.

In Fig.2a wird eine Situation dargestellt, in der die Empfangsachse EA und die optische Achse bzw. der Mittelpunkt des Meßempfängers 5 nicht übereinstimmen. Durch Verschieben der Leiterplatte gegenüber dem Optikträger 6 kann die in Fig.2b dargestellte Situation mit der Ausrichtung des Meßempfängers 5 auf die Empfangsachse EA erreicht werden. Nach erfolgter Positionierung kann die Leiterplatte 7 am Optikträger 6 fixiert werden. Durch die Öffnung 7a in der Leiterplatte wird die Laserdiode 2 von der Verschiebung der Leiterplatte 7 entkoppelt. Nach erfolgter Justierung werden die Kontaktelemente 2a der Laserdiode 2 mit der Leiterplatte 7 und der darauf angeordneten Sendeelektronik verbunden. Die Fixierung der gemeinsamen Leiterplatte 7 erfolgt in diesem Beispiel gegenüber dem Optikträger 6. Erfindungsgemäss können jedoch auf zwei getrennte Leiterplatten für Laserdiode 2 und Meßempfänger 5 verwendet werden. Ebenso kann auch eine unmittelbare Fixierung der Leiterplatte 7 an der Empfangsoptik 4 oder eine mittelbare Befestigung über das Gehäuse 8 erfolgen. Wird auch eine Bewegungsmöglichkeit der Leiterplatte 7 in Richtung der Empfangsachse EA realisiert, kann auf den Fixfokus verzichtet und eine Fokussierung des Meßempfängers 5 erreicht werden.

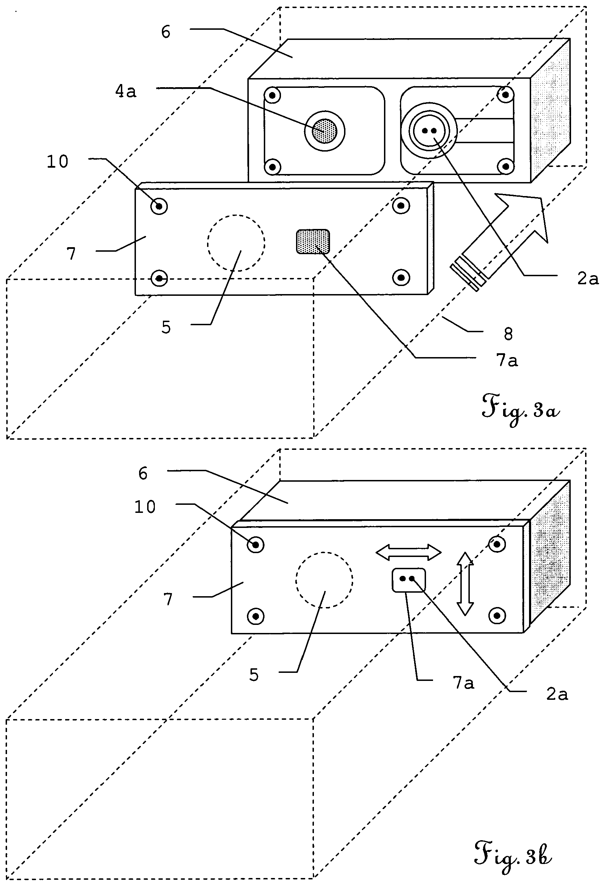

In Fig. 3a-b wird der Aufbau des ersten Ausführungsbeispiels mittels figürlicher Detailansichten veranschaulicht. Aus Darstellungsgründen werden im Gehäuse 8 nur die Leiterplatte 7 und der Optikträger 6 gezeigt. Auf der in Fig.3a sichtbaren Rückseite des Optikträgers 6 sind eine Empfangsöffnung 4a der Empfangsoptik 4 und die Rückseite der Laserdiode mit den Kontaktelementen 2a zu erkennen. In der Leiterplatte 7 und dem Optikträger 6 sind Bohrungen 10 zur Verbindung dieser Komponenten mittels Schrauben angebracht, wobei diese Verbindung ausgelegt ist, dass vor dem Anziehen der Schraubverbindung noch eine Verschiebbarkeit der Leiterplatte 7 gegenüber dem Optikträger 6 besteht. Die Leiterplatte 7 ist soweit grundjustiert, dass die Kontaktelemente 2a mit der Öffnung 7a und der - hier auf der abgewandten Seite der Leiterplatte 7 angeordnete - Meßempfänger 5 mit der Empfangsöffnung 4a fluchten.

Fig.3b zeigt das Entfernungsmeßgerät beim Justiervorgang. Leiterplatte 7 und Optikträger 6 stehen miteinander in Verbindung, wobei die Kontaktelemente 2a mit einem für die Justierung hinreichenden Spiel durch die Öffnung 7a der Leiterplatte 7 geführt sind. Durch laterale Verschiebung der Leiterplatte 7 gegenüber dem Optikträger 6 wird der Meßempfänger 5 bezüglich der Empfangsachse justiert.

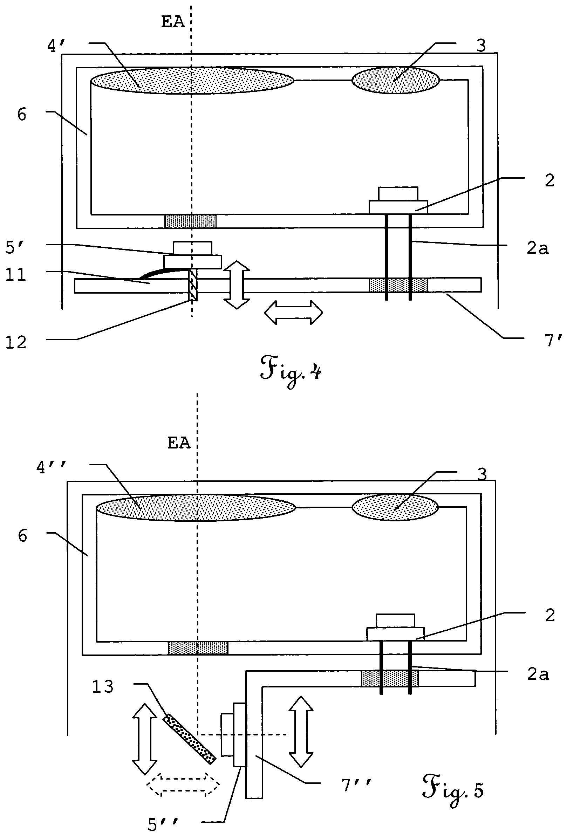

In Fig.4 und Fig.5 werden zwei alternative Ausführungsbeispiele eines erfindungsgemässen Entfernungsmeßgerätes dargestellt.

Dabei zeigt Fig. 4 eine schematische Detailansicht eines zweiten Ausführungsbeispiels mit einem senkrecht zur Leiterplatte 7' bewegbaren Meßempfänger 5'. Die Empfangsoptik 4' ist in diesem Ausführungsbeispiel nicht mit Fixfokus ausgebildet so dass eine fokussierende Positionierung des Meßempfängers 5' erforderlich ist. Der Meßempfänger 5' ist in zwei Bewegungsrichtungen gegenüber der Leiterplatte 7' fixiert. In der dritten Bewegungsrichtung kann dieser jedoch bewegt werden, wobei eine federnde Lagerung auf einem elastischen Element 11, z.B. einer freigestellten Leiterbahn, erfolgt. Dabei ist der Meßempfänger 5' auf der Leiterbahn selbst hinsichtlich aller Bewegungsrichtungen starr angeordnet und bereits bei der Bestückung endfixiert. Die Justierbarkeit in einer Dimension bzw. die Fokussierbarkeit entsteht durch die federnde Beweglichkeit der Leiterbahn gegenüber der Leiterplatte. Die präzise Verstellung und Fixierung wird beispielhaft durch eine Madenschraube 12 ermöglicht. Durch diese Ausgestaltung kann der Meßempfänger 5' durch Verschieben der Leiterplatte 7' senkrecht zur Empfangsachse EA positioniert werden, wobei die Fokussierung durch Verstellung der Madenschraube 12 erfolgt.

Fig. 5 zeigt ein drittes Ausführungsbeispiel mit einem zur Fokussierung geeigneten Umlenkspiegel 13 oder einem anderen optischen Umlenkelement für eine Empfangsoptik 4'' ohne Fixfokus. Wiederum ist der Meßempfänger 5'' auf der nun gewinkelten Leiterplatte 7'' befestigt, wobei in diesem Ausführungsbeispiel alle Freiheitsgrade des Meßempfängers 5'' bezüglich der Leiterplatte reduziert sind und eine feste Verbindung besteht. Durch die entkoppelbare und damit gegeneinander unabhängige Bewegung von Umlenkspiegel 13 und Leiterplatte 7'' kann sowohl eine Positionierung senkrecht zur Empfangsachse EA als auch eine Fokussierung erreicht werden. Je nach konkreten Auslegungsmerkmalen, wie z.B. Grösse der Empfangsfläche des Meßempfängers 5'', kann die Relativbewegung von Spiegel 13 und Meßempfänger 5'' in verschiedenen Richtungen ermöglicht werden, was in Fig.5 durch einen gestrichelten Pfeil verdeutlicht wird.

Die in den Figuren gezeigten Ausführungsbeispiele sind nicht als abschliessend zu verstehen. Insbesondere können einzelnen Merkmale miteinander kombiniert werden. So können auch geteilte Leiterplatten oder solche mit verschiedenen Abwinklungen oder unebenen Verläufen, die sich beispielsweise entsprechenden Ausgestaltungen des Gehäuses anpassen, verwendet werden. Auch kann die Festlegung der Leiterplatte oder eines anderen Trägerelementes mittels anders ausgebildeter Klemm-, Löt- oder auch Klebetechniken erfolgen.

**Patentansprüche**

1.  Elektrooptisches Entfernungsmessgerät (1) mit

    • einem Sender, insbesondere einer Laserdiode (2), der optische Strahlung zur Beleuchtung eines Messobjekts emittiert,
    • einer relativ zum Sender starr fixierten Sendeoptik (3),
    • einem ersten Trägerelement mit einer Sendeelektronik,
    • einem Messempfänger (5,5', 5''), insbesondere eine Avalanche-Photodiode, der vom Messobjekt reflektierte Strahlung detektiert,
    • einer Empfangsoptik (4,4', 4''),
    • einem zweiten Trägerelement mit einer Empfangselektronik,

    **dadurch gekennzeichnet, dass**
    das zweite Trägerelement mit dem Messempfänger (5,5', 5'') bezüglich wenigstens zweier Bewegungsrichtungen in starrer Verbindung bestückt und gegenüber der Empfangsoptik (4,4', 4'') bewegbar ist und wobei der Sender, die Sendeoptik (3) und die Empfangsoptik (4,4', 4'') starr auf einem Optikträger (6) fixiert sind.

2.  Entfernungsmessgerät (1) nach Anspruch 1,
    **dadurch gekennzeichnet, dass**
    der Messempfänger (5') auf einer Leiterbahn des zweiten Trägerelements und gegenüber der Leiterbahn bezüglich aller Bewegungsrichtungen endfixiert bestückt ist.

3.  Entfernungsmessgerät (1) nach Anspruch 1 oder 2,
    **dadurch gekennzeichnet, dass**
    das zweite Trägerelement im wesentlichen flächig ausgebildet und der Messempfänger bezüglich wenigstens der Bewegungsrichtungen in der Fläche fixiert ist.

4.  Entfernungsmessgerät (1) nach einem der vorangehenden Ansprüche,
    **dadurch gekennzeichnet, dass**
    der Messempfänger senkrecht zum zweiten Trägerelement bewegbar ist.

5.  Entfernungsmessgerät (1) nach Anspruch 4,
    **dadurch gekennzeichnet, dass**
    der Messempfänger durch eine federnde Komponente (11) des zweiten Trägerelementes senkrecht zum zweiten Trägerelement bewegbar ist.

6.  Entfernungsmessgerät (1) nach Anspruch 1, 2 oder 3,
    **dadurch gekennzeichnet, dass**
    der Messempfänger auf dem zweiten Trägerelement in allen drei Bewegungsrichtungen fixiert ist und die Empfangsoptik (4) einen Fixfokus aufweist.

7.  Entfernungsmessgerät (1) nach Anspruch 6,
    **dadurch gekennzeichnet, dass**
    der Messempfänger als direkt auf dem Trägerelement oberflächenmontiertes Bauelement fixiert ist.

8.  Entfernungsmessgerät (1) nach einem der vorangehenden Ansprüche,
    **dadurch gekennzeichnet, dass**
    der Sender als Laserdiode mit in ein Gehäuse der Laserdiode integrierter Treiberelektronik ausgebildet ist.

9.  Entfernungsmessgerät (1) nach einem der vorangehenden Ansprüche,
    **dadurch gekennzeichnet, dass**
    dem Messempfänger (5'') ein gegenüber dem Messempfänger (5'') oder der Empfangsoptik (4'') bewegbares Spiegelelement (13) vorgeschaltet ist.

10. Entfernungsmessgerät (1) nach Anspruch 9, **dadurch gekennzeichnet, dass** das Spiegelelement (13) in Richtung der optischen Achse des Empfangsobjektivs (4'') bewegbar ist, insbesondere gemeinsam mit dem Messempfänger (5'').

11. Entfernungsmessgerät (1) nach einem der vorangehenden Ansprüche, **dadurch gekennzeichnet, dass** erstes und zweites Trägerelement ein gemeinsames Trägerelement, insbesondere eine Leiterplatte (7,7',7''), bilden.

12. Entfernungsmessgerät (1) nach Anspruch 11, **dadurch gekennzeichnet, dass** das gemeinsame Trägerelement gegenüber der Empfangsoptik (4,4', 4'') und/oder dem Optikträger (6) bewegbar, insbesondere in einer Ebene senkrecht zur optischen Achse der Empfangsoptik (4,4', 4'') verschiebbar ist.

13. Entfernungsmessgerät (1) nach Anspruch 11 oder 12, **dadurch gekennzeichnet, dass** das gemeinsame Trägerelement eine fixierbare elektrische Verbindung zum Sender aufweist.

14. Entfernungsmessgerät (1) nach einem der vorangehenden Ansprüche, **dadurch gekennzeichnet, dass** eine Emissionsachse des Senders koaxial zu einer Sendeachse der Sendeoptik ist.

15. Verfahren zum Justieren eines elektrooptischen Entfernungsmessgerät (1) mit

• einem Sender, insbesondere einer Laserdiode (2), der optische Strahlung zur Beleuchtung eines Messobjekts emittiert,
• einer relativ zum Sender starr fixierten Sendeoptik (3),
• einem ersten Trägerelement mit einer Sendelektronik,
• einem Messempfänger (5,5', 5''), insbesondere eine Avalanche-Photodiode, der vom Messobjekt reflektierte Strahlung detektiert,
• einer Empfangsoptik (4,4', 4''),
• einem zweiten Trägerelement mit einer Empfangselektronik,

und mit einem Positionieren des Messempfängers (5,5', 5'') bezüglich der Empfangsoptik (4,4', 4''), **dadurch gekennzeichnet, dass** das zweite Trägerelement mit dem Messempfänger (5,5', 5'') bezüglich wenigstens zweier Bewegungsrichtungen in starrer Verbindung bestückt ist und beim Positionieren gegenüber der Empfangsoptik (4,4', 4'') bewegt wird und
der Sender, die Sendeoptik (3) und die Empfangsoptik (4,4', 4'') starr auf einem Optikträger (6) fixiert sind.

**Claims**

1. Electrooptical distance measuring device (1) comprising:

• a transmitter, in particular a laser diode (2), which emits optical radiation for illuminating a measured object,
• a transmission optical system (3) rigidly fixed relative to the transmitter,
• a first support element having transmission electronics,
• a measuring receiver (5, 5', 5''), in particular an avalanche photodiode, which detects radiation reflected by the measured object,
• a receiving optical system (4, 4', 4''),
• a second support element having receiving electronics,

**characterized in that**
the second support element is equipped with the measuring receiver (5, 5', 5'') rigidly connected with respect to at least two directions of movement and wherein the transmitter, the transmission optical system (3) and the receiving optical system (4, 4', 4'') are rigidly fixed on an optics support (6) .

2. Distance measuring device (1) according to Claim 1, **characterized in that** the measuring receiver (5') is inserted on a conductor track of the second support element and finally fixed relative to the conductor track with respect to all directions of movement.

3. Distance measuring device (1) according to Claim 1 or 2, **characterized in that** the second support element is substantially sheet-like and the measuring receiver is fixed with respect to at least the directions of movement in the surface.

4. Distance measuring device (1) according to any of the preceding Claims, **characterized in that** the measuring receiver can be moved perpendicularly to the second support element.

5. Distance measuring device (1) according to claim 4, **characterized in that** the measuring receiver can be moved perpendicularly to the second support element by a springy component (11) of the second support element.

6. Distance measuring device (1) according to Claim 1, 2 or 3, **characterized in that** the measuring receiver is fixed on the second support element in all three directions of movement and the receiving optical system (4) has a fixed focus.

7. Distance measuring device (1) according to claim 6, **characterized in that** the measuring receiver is fixed as an assembly surface-mounted directly on the support element.

8. Distance measuring device (1) according to any of the preceding Claims, **characterized in that** the transmitter is in the form of a laser diode having driver electronics integrated in a housing of the laser diode.

9. Distance measuring device (1) according to any of the preceding Claims, **characterized in that** a mirror element (13) which is moveable relative to the measuring receiver (5'') or the receiving optical system (4'') is located up-circuit of the measuring receiver (5'').

10. Distance measuring device (1) according to Claim 9, **characterized in that** the mirror element (13) is moveable in the direction of the optical axis of the receiving objective (4''), in particular together with the measuring receiver (5'').

11. Distance measuring device (1) according to any of the preceding Claims, **characterized in that** first and second support elements form a common support element, in particular a circuit board (7, 7', 7'').

12. Distance measuring device (1) according to Claim 11, **characterized in that** the common support element is movable relative to the receiving optical system (4, 4', 4'') and/or the optics support (6), in particular displaceable in a plane perpendicular to the optical axis of the receiving optical system (4, 4', 4'').

13. Distance measuring device (1) according to Claim 11 or 12, **characterized in that** the common support element has an electrical connection to the transmitter which can be fixed.

14. Distance measuring device (1) according to any of the preceding Claims, **characterized in that** an emission axis of the transmitter is coaxial with a transmission axis of the transmission optical system.

15. Method for adjusting an electrooptical distance measuring device (1) comprising

- a transmitter, in particular a laser diode (2), which emits optical radiation for illuminating a measured object,
- a transmission optical system (3) rigidly fixed relative to the transmitter,
- a first support element having transmission electronics,
- a measuring receiver (5, 5', 5''), in particular an avalanche photodiode, which detects radiation reflected by the measured object,
- a receiving optical system (4, 4', 4''),
- a second support element having receiving electronics,

and comprising positioning of the measuring receiver (5, 5', 5'') relative to the receiving optical system, (4, 4', 4''), **characterized in that** the second support element is moved relative to the receiving optical system (4, 4', 4'') during positioning and the transmitter, the transmission optical system (3) and the receiving optical system (4, 4', 4'') are rigidly fixed on an optics support (6).

**Revendications**

1. Télémètre électro-optique (1) comportant

- un émetteur, en particulier une diode laser (2), qui émet un rayonnement optique pour éclairer un objet de mesure,
- une optique d'émission (3) fixée rigidement par rapport à l'émetteur,
- un premier élément de support avec une électronique d'émission,
- un récepteur de mesure (5, 5', 5''), en particulier une photodiode à avalanche, qui détecte un rayonnement réfléchi par l'objet de mesure,
- une optique de réception (4, 4', 4''),
- un deuxième élément de support avec une électronique de réception,

**caractérisé en ce que** le deuxième élément de support est équipé du récepteur de mesure (5, 5', 5'') en liaison rigide en ce qui concerne au moins deux directions de déplacement et est déplaçable par rapport à l'optique de réception (4, 4', 4''), l'émetteur, l'optique d'émission (3) et l'optique de réception (4, 4', 4'') étant fixés de manière rigide sur un support optique (6).

2. Télémètre (1) selon la revendication 1, **caractérisé en ce que** le récepteur de mesure (5') est équipé sur une piste conductrice du deuxième élément de support et fixé de manière définitive par rapport à la piste conductrice en ce qui concerne toutes les directions de déplacement.

**3.** Télémètre (1) selon la revendication 1 ou 2, **caractérisé en ce que** le deuxième élément de support est de forme sensiblement plane et le récepteur de mesure est fixé dans la surface en ce qui concerne au moins les directions de déplacement.

**4.** Télémètre (1) selon l'une des revendications précédentes, **caractérisé en ce que** le récepteur de mesure est déplaçable perpendiculairement par rapport au deuxième élément de support.

**5.** Télémètre (1) selon la revendication 4, **caractérisé en ce que** le récepteur de mesure est déplaçable perpendiculairement par rapport au deuxième élément de support par un composant faisant ressort (11) du deuxième élément de support.

**6.** Télémètre (1) selon la revendication 1, 2 ou 3, **caractérisé en ce que** le récepteur de mesure est fixé sur le deuxième élément de support dans les trois directions de déplacement et l'optique de réception (4) présente un foyer fixe.

**7.** Télémètre (1) selon la revendication 6, **caractérisé en ce que** le récepteur de mesure est fixé sous la forme d'un composant monté directement en surface sur l'élément de support.

**8.** Télémètre (1) selon l'une des revendications précédentes, **caractérisé en ce que** l'émetteur est réalisé sous la forme d'une diode laser avec électronique d'attaque intégrée dans un boîtier de la diode laser.

**9.** Télémètre (1) selon l'une des revendications précédentes, **caractérisé en ce qu'**un élément miroir (13) déplaçable par rapport au récepteur de mesure (5") ou à l'optique de réception (4") est placé en amont du récepteur de mesure (5").

**10.** Télémètre (1) selon la revendication 9, **caractérisé en ce que** l'élément miroir (13) est déplaçable dans la direction de l'axe optique de l'objectif de réception (4"), en particulier en commun avec le récepteur de mesure (5").

**11.** Télémètre (1) selon l'une des revendications précédentes, **caractérisé en ce que** les premier et deuxième éléments de support forment un élément de support commun, en particulier une carte de circuit imprimé (7, 7', 7").

**12.** Télémètre (1) selon la revendication 11, **caractérisé en ce que** l'élément de support commun est déplaçable par rapport à l'optique de réception (4, 4', 4") et/ou au support optique (6), en particulier est coulissant dans un plan perpendiculaire à l'axe optique de l'optique de réception (4, 4', 4").

**13.** Télémètre (1) selon la revendication 11 ou 12, **caractérisé en ce que** l'élément de support commun présente une connexion électrique avec l'émetteur qui peut être fixée.

**14.** Télémètre (1) selon l'une des revendications précédentes, **caractérisé en ce qu'**un axe d'émission de l'émetteur est coaxial à un axe d'émission de l'optique d'émission.

**15.** Procédé pour régler un télémètre électro-optique (1) comportant

- un émetteur, en particulier une diode laser (2), qui émet un rayonnement optique pour éclairer un objet de mesure,
- une optique d'émission (3) fixée rigidement par rapport à l'émetteur,
- un premier élément de support avec une électronique d'émission,
- un récepteur de mesure (5, 5', 5"), en particulier une photodiode à avalanche, qui détecte un rayonnement réfléchi par l'objet de mesure,
- une optique de réception (4, 4', 4"),
- un deuxième élément de support avec une électronique de réception,

et consistant à positionner le récepteur de mesure (5, 5', 5") par rapport à l'optique de réception (4, 4', 4"), **caractérisé en ce que** le deuxième élément de support est équipé du récepteur de mesure (5, 5', 5") en liaison rigide en ce qui concerne au moins deux directions de déplacement et est déplacé par rapport à l'optique de réception (4, 4', 4") lors du positionnement, et l'émetteur, l'optique d'émission (3) et l'optique de réception (4, 4', 4") sont fixés de manière rigide sur un support optique (6).

Fig. 1

Fig. 2a

Fig. 2b

6

4a

10

7

5

2a

8

7a

*Fig. 3a*

6

10

7

5

7a

2a

*Fig. 3b*

EA

4′

3

6

2

5′

11

2a

12

7′

*Fig. 4*

EA

4′′

3

6

2

13

2a

5′′

7′′

*Fig. 5*

**EP 1 913 416 B1**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0701702 A
- EP 1351070 A
- US 5812893 A